# EUROPÄISCHE PATENTSCHRIFT

(11) **EP 1 702 816 B1**
(45) Veröffentlichungstag und Bekanntmachung des Hinweises auf die Patenterteilung: **23.12.2009**
(21) Anmeldenummer: 06003872.6
(22) Anmeldetag: 25.02.2006
(51) Int. Cl.: B60R 22/30

(54) **Gurtführungselement für einen Sicherheitsgurt und Sicherheitsgurtanordnung mit einem Gurtführungselement**
Belt guiding element for a safety belt and safety belt arrangement with a belt guiding element
Elément de guidage pour un ceinture de sécurité et agencement de ceinture de sécurité avec un tel élément de guidage

(30) Priorität: 16.03.2005 DE 102005012019
(43) Veröffentlichungstag der Anmeldung: 20.09.2006
(73) Patentinhaber: GM Global Technology Operations, Inc., Detroit, MI 48265-3000 (US)
(72) Erfinder: Steinbach, Markus, 55234 Wahlheim (DE); Sulzbacher, Wilhelm, 65239 Hochheim (DE)
(74) Vertreter: Strauss, Peter

(56) Entgegenhaltungen:
- EP-A- 0 769 432
- EP-A- 1 136 331
- DE-A1- 19 901 784
- DE-U1- 29 615 407
- FR-A- 2 723 556
- FR-A- 2 829 449
- US-A- 5 218 744
- US-A- 5 957 499
- US-A1- 2004 169 411
- US-B1- 6 217 069

## Beschreibung

Die vorliegende Erfindung betrifft ein Gurtführungselement für den Sicherheitsgurt eines Kraftfahrzeuges mit einem Bügel, der unter Ausbildung einer länglichen Führung zwischen dem Bügel und der Innenwand des Kraftfahrzeuges an der Innenwand befestigt werden kann. Die vorliegende Erfindung betrifft ferner eine Sicherheitsgurtanordnung für ein Kraftfahrzeug mit einem Sicherheitsgurt, der mit einem lösbaren Endbeschlag versehen ist, und dem erfindungsgemäßen Gurtführungselement.

Aus dem Stand der Technik sind Sicherheitsgurte für Fahrzeuginsassen bekannt, die einen an dem Kraftfahrzeug befestigten Endbeschlag aufweisen.

So beschreibt die DE 296 15 407 U1 einen Endbeschlag für einen Sicherheitsgurt, der im Bereich des unteren Endes der B-Säule des Kraftfahrzeuges festgeschraubt ist. Der bekannte Endbeschlag weist wiederum einen nach oben stehenden Bügel auf, an dem das Ende des Sicherheitsgurtes angenäht ist.

Größere Personenkraftwagen umfassen heutzutage nicht mehr nur zwei Sitzreihen, nämlich eine erste Sitzreihe für Fahrer und Beifahrer und eine dahinter angeordnete zweite Sitzreihe für weitere Personen, sondern auch häufig noch eine hinter der zweiten Sitzreihe angeordnete dritte Sitzreihe für weitere Fahrzeuginsassen. Um den Bereich der zweiten und dritten Sitzreihe auch für den Transport sperriger Gegenstände verwenden zu können, sind die Sitze der zweiten und dritten Sitzreihe häufig klappbar oder herausnehmbar ausgebildet, so dass durch Umklappen oder Herausnehmen der Sitze ein großer Laderaum geschaffen werden kann.

Hierbei besteht das Problem, dass die für die hinteren Sitzreihen vorgesehenen Sicherheitsgurte für die Fahrzeuginsassen erhalten bleiben und beim Be- und Entladen stören. Aus diesem Grunde wurden Sicherheitsgurte entwickelt, die über einen Endbeschlag lösbar an einer fahrzeugseitigen Gurtöse befestigt sind. Nach dem Lösen des Endbeschlages kann der Sicherheitsgurt fast vollständig von einer Gurtstraffungseinrichtung eingezogen werden, so dass er nicht mehr störend durch den Laderaum verläuft.

Die vorstehend genannte Lösung ist jedoch mit weiteren Nachteilen behaftet. So verläuft der Sicherheitsgurt ausgehend von dem befestigten Endbeschlag bis zur Gurtstraffungseinrichtung nicht eng anliegend an der Innenwand des Kraftfahrzeuges. Wird ein solcher Sicherheitsgurt nicht zum Anschnallen eines Fahrzeuginsassen benutzt, so schlägt der Gurt wie auch die hieran verschiebbar befestigte Gurtzunge, bedingt durch Wendemanöver des Kraftfahrzeuges o.ä., gegen die Innenwand bzw. Innenverkleidung des Kraftfahrzeuges, was zu einer Beschädigung derselben und zu unangenehmer Geräuschentwicklung führt. Aus diesem Grunde wurden an der Innenwand von Kraftfahrzeugen Gurtführungselemente vorgesehen, die den Sicherheitsgurt eng an der Innenwand entlang führen.

Wird der Endbeschlag der bekannten Sicherheitsgurte gelöst und der Sicherheitsgurt weitgehend in die Gurtstraffungseinrichtung eingezogen, so verbleibt der Endbeschlag jedoch weiterhin vor der Innenverkleidung, was wiederum mit dem Problem verbunden ist, dass der Endbeschlag bei entsprechenden Manövern des Kraftfahrzeuges gegen die Innenverkleidung schlägt. Zu diesem Zweck wurde beispielsweise in der Innenverkleidung des so genannten Eurovan eine zusätzliche Aufnahme geschaffen, in die der hakenförmige Endbeschlag eingehakt werden kann. Dies verhindert zwar ein Anschlagen des Endbeschlages gegen die Innenverkleidung, führt jedoch auch zu einer aufwendigen Konstruktion. Darüber hinaus gestaltet sich das Einhaken in die Aufnahme in der Innenverkleidung schwierig. Ein weiterer wesentlicher Nachteil besteht darin, dass ein Fahrzeuginsasse den Sicherheitsgurt in seine den Fahrzeuginsassen umspannende Position bringen kann, ohne zu bemerken, dass der Endbeschlag noch in der Aufnahme der Innenverkleidung und nicht an der für den Endbeschlag vorgesehenen Öse am Kraftfahrzeug befestigt ist. Bei einem Aufprall des Kraftfahrzeuges kann die Aufnahme jedoch nicht die notwendige Rückhaltekraft aufbringen, so dass die Sicherheit des angeschnallten Fahrzeuginsassen nicht gewährleistet ist.

Die DE 199 01 784 A1 beschreibt ein Sicherheitsrückhaltesystem für ein Kraftfahrzeug, wobei das System ein Gurtführungselement aufweist, das als Gleitstab ausgebildet ist, der mit beiden Enden an dem Fahrzeughimmel befestigt ist. Zur Aufnahme des gelösten Endbeschlages des Sicherheitsgurtes und einer an dem Sicherheitsgurt angeordneten Gurtzunge schlägt die Druckschrift eine an der Innenwand des Kraftfahrzeugs angeordnete Tasche vor.

Ferner ist aus der EP 1 136 331 A2 eine Schließzungenanordnung für einen Kraftfahrzeugsicherheitsgurt bekannt, die ein Gurtführungselement mit einer bügelartigen Gurtführung und einem Umlenkbeschlag zum Umlenken des Sicherheitsgurtes aufweist. Um eine entlang des Sicherheitsgurtes verschiebbare Schließzunge in einer Stauposition sicher zu befestigen, schlägt die EP 1 136 331 A2 einen Permanentmagneten vor, der von der bügelartigen Gurtführung und dem Umlenkbeschlag entfernt an dem Dachhimmel des Kraftfahrzeugs angeordnet ist. Der Gurtendbeschlag, der ebenfalls in der Art einer Schließzunge ausgebildet ist, kann über einen weiteren Magneten am Gurtendbeschlag an der verschiebbaren Schließzunge befestigt werden, also nicht direkt an dem Permanentmagneten am Dachhimmel.

Gegenüber dem zuvor beschriebenen Stand der Technik, kann der aus der EP 0 769 432 A1 bekannte Endbeschlag direkt an einem Magneten eines Gurtführungselementes befestigt werden. Das bekannte Gurtführungselement weist eine geschlossene Öse auf, die auf einer Seite durch einen Bügel begrenzt ist, auf dem der Sicherheitsgurt geführt ist. Der Magnet zum Befestigen des Endbeschlages ist an einem separaten Basisstützelement und somit entfernt von dem Bügel an dem Dachhimmel des Kraftfahrzeugs angeordnet. Das Dokument EPO 769 432A offenbart die Merkmale des Oberbegriffs des unabhängigen Anspruchs.

Die bekannten Gurtführungselemente haben sich bewährt, sind jedoch insofern von Nachteil, als dass diese einen großen Raum bzw. Bereich an der Innenwand des Kraftfahrzeugs beanspruchen.

Es ist daher eine Aufgabe der vorliegenden Erfindung, ein Gurtführungselement für einen Sicherheitsgurt eines Kraftfahrzeuges mit einem Bügel, der unter Ausbildung einer länglichen Führung zwischen dem Bügel und der Innenwand des Kraftfahrzeuges an der Innenwand befestigt werden kann, zu schaffen, das einfach zu handhaben ist, eine Beschädigung bzw. ein Verkratzen der Innenwand bzw. Innenverkleidung verhindert, eine hohe Sicherheit für angeschnallte Personen gewährleistet und darüber hinaus einen kompakten Aufbau hat. Der Erfindung liegt ferner die Aufgabe zu Grunde, eine Sicherheitsgurtanordnung mit dem erfindungsgemäßen Gurtführungselement zu schaffen, die ebenfalls die vorgenannten Vorteile aufweist.

Diese Aufgabe wird durch die in den Patentansprüchen 1 bzw. 9 angegebenen Merkmale gelöst. Vorteilhafte Ausführungsformen der Erfindung sind Gegenstand der Unteransprüche.

Das erfindungsgemäße Gurtführungselement für einen Sicherheitsgurt eines Kraftfahrzeuges weist einen Bügel auf. Der Bügel kann unter Ausbildung einer länglichen Führung für einen Sicherheitsgurt zwischen dem Bügel und der Innenwand eines Kraftfahrzeuges an der Innenwand befestigt werden. Es ist ein Befestigungsmittel zur Befestigung des Endbeschlages eines Sicherheitsgurtes an dem Gurtführungselement vorgesehen. Das Befestigungsmittel ist als Magnet ausgebildet. Hierdurch wird die Handhabung des Sicherheitsgurtes weiter vereinfacht, da der in der Regel metallische Endbeschlag einfach an den Magneten herangeführt werden muss, um festgelegt zu werden. Darüber hinaus ist es nicht möglich, den Sicherheitsgurt wieder in eine den Fahrzeuginsassen umgebende Anschnallposition zu bringen, ohne den Endbeschlag zuvor wieder an der hierfür vorgesehenen Öse am Kraftfahrzeug anzubringen. Dies ist darauf zurückzuführen, dass sich der Endbeschlag während des Anschnallvorganges leicht von dem Magneten lösen würde, wodurch der Fahrzeuginsasse darauf aufmerksam wird, dass der Endbeschlag wieder an der hierfür vorgesehenen Öse an dem Kraftfahrzeug angebracht werden muss. Die Sicherheit der angeschnallten Person ist demzufolge gewährleistet. Erfindungsgemäß ist der Magnet an dem Bügel angeordnet.

Da der Bügel die längliche Führung für den Sicherheitsgurt definiert, ist dieser in Erstreckungsrichtung des Sicherheitsgurtes angeordnet, so dass ein besonders zielgerichtetes und einfaches Heranführen des gelösten Endbeschlages an den Magneten möglich ist. Auch kann das Gurtführungselement besonders kompakt und Platz sparend ausgebildet sein, da neben dem Bügel kein weiteres Stützelement o. ä. zur Aufnahme des Magneten vorgesehen sein muss. Die Erfindung hat ferner den Vorteil, dass keine weitere Aufnahme in der Innenverkleidung notwendig ist, um den lösbaren Endbeschlag eines Sicherheitsgurtes festzulegen, wie dies z.B. bei dem Eurovan der Fall ist. Vielmehr kombiniert das erfindungsgemäße Gurtführungselement Aufnahme- und Führungselement in vorteilhafter Weise, wodurch die Handhabung des Sicherheitsgurtes vereinfacht ist.

Um die Handhabung des Sicherheitsgurtes bzw. das Anbringen des gelösten Endbeschlages an dem Gurtführungselement weiter zu vereinfachen, ist der Magnet in einer vorteilhaften Ausführungsform des erfindungsgemäßen Gurtführungselementes im Einbauzustand des Gurtführungselementes auf der dem Innenraum zugewandten Seite des Gurtführungselementes angeordnet, so dass der Magnet schnell und direkt erreichbar ist.

In einer weiteren vorteilhaften Ausführungsform des erfindungsgemäßen Gurtführungselementes weist das Gurtführungselement ein Befestigungsteil auf, das an der Innenwand befestigt werden kann und an dem der Bügel angeordnet ist. Das Befestigungsteil dient hier als Abstandshalter zwischen Bügel und Innenwand und kann auf seiner der Innenwand zuzuwendenden Seite beispielsweise Einrastvorsprünge aufweisen, die in entsprechende Einrastvertiefungen in der Innenverkleidung des Kraftfahrzeuges eingerastet werden können.

In einer bevorzugten Ausführungsform des erfindunsgemäßen Gurtführungselementes ist die längliche Führung an dem dem Befestigungsteil abgewandten Ende des Bügels offen, so dass ein Sicherheitsgurt seitlich eingebracht werden kann. Soll der Sicherheitsgurt in eine den Fahrzeuginsassen umspannende Anschnallposition gebracht werden, so kann der Sicherheitsgurt einfach seitlich aus der Führung herausgeführt werden. Wird der Sicherheitsgurt nicht zum Anschnallen benötigt, kann er seitlich wieder in die lang gestreckte Führung des Gurtführungselementes eingebracht werden.

Um ein ungewolltes seitliches Herausziehen oder Herausgleiten des Sicherheitsgurtes zu erschweren, ist an dem dem Befestigungsteil abgewandten Ende des Bügels in einer weiteren vorteilhaften Ausführungsform des erfindungsgemäßen Gurtführungselementes ein vorspringender Ansatz vorgesehen, der sich im Einbauzustand des Gurtführungselementes in Richtung der Innenwand erstreckt. Der vorspringende Ansatz kann beispielsweise einstückig mit dem Bügel und von dem gebogenen Ende des Bügels ausgebildet sein.

In einer besonders bevorzugten Ausführungsform des erfindungsgemäßen Gurtführungselementes ist an dem Gurtführungselement eine Vertiefung zum Einstecken des einsteckseitigen Endes einer Gurtzunge vorgesehen. Auf diese Weise kann die Gurtzunge einfach an dem Gurtführungselement festgelegt werden, ohne dass diese gegen die Innenverkleidung bzw. die Innenwand des Kraftfahrzeuges schlägt. Auch muss die Gurtzunge nicht umständlich in die Führung eingefädelt werden.

Gemäß einer vorteilhaften Weiterbildung des erfindungsgemäßen Gurtführungselementes ist die Vertiefung zu Aufnahme des einsteckseitigen Endes der Gurtzunge im Einbauzustand des Gurtführungselementes auf der nach oben weisenden Seite des Gurtführungselementes angeordnet. Die verschiebbar an dem Sicherheitsgurt angeordnete Gurtzunge weist mit dem einsteckseitigen Ende nach unten, wodurch die Anbringung derselben an dem Gurtführungselement bei der genannten Ausführungsform vereinfacht ist, da das einsteckseitige Ende der Gurtzunge somit bereits in Richtung der Vertiefung weist, wenn die Gurtzunge über das Gurtführungselement gebracht wird.

In einer weiteren vorteilhaften Ausführungsform des erfindungsgemäßen Gurtführungselementes ist die Vertiefung in dem Bügel vorgesehen. Da der Bügel die längliche Führung für den Sicherheitsgurt definiert, ist dieser in Erstreckungsrichtung des Sicherheitsgurtes angeordnet, so dass ein besonders zielgerichtetes und einfaches Heranführen der Gurtzunge zu der Vertiefung möglich ist.

Die erfindungsgemäße Sicherheitsgurtanordnung für ein Kraftfahrzeug weist einen Sicherheitsgurt, der mit einem lösbaren Endbeschlag versehen ist, und ein Gurtführungselement der zuvor beschriebenen Art auf.

In einer vorteilhaften Ausführungsform der erfindungsgemäßen Sicherheitsgurtanordnung besteht der Endbeschlag aus magnetisierbarem Metall. Dies gewährleistet einerseits ein Anhaften an dem magnetischen Befestigungsmittel des Gurtführungselementes und andererseits eine stabile Form des Endbeschlages.

In einer bevorzugten Ausführungsform der erfindungsgemäßen Sicherheitsgurtanordnung ist der lösbare Endbeschlag hakenförmig, vorzugsweise in der Art eines Karabinerhakens, ausgebildet.

In einer weiteren vorteilhaften Ausführungsform der erfindungsgemäßen Sicherheitsgurtanordnung sind der Bügel und der hakenförmige Endbeschlag derart dimensioniert, dass der hakenförmige Endbeschlag in den Bügel eingehakt werden kann.

In einer besonders bevorzugten Ausführungsform der erfindungsgemäßen Sicherheitsgurtanordnung kann der hakenförmige Endbeschlag seitlich auf den Bügel aufgeschoben werden. Dies kann beispielsweise über das freie, dem Befestigungsteil des Gurtführungselementes abgewandte Ende des Bügels erfolgen. Auf diese Weise muss der hakenförmige Endbeschlag lediglich auf den Bügel aufgeschoben werden, um diesen festzulegen. Auch das Lösen des Endbeschlages kann durch einfaches seitliches Verschieben des Endbeschlages erfolgen. Die Handhabung der Sicherheitsgurtanordnung ist hierdurch stark vereinfacht.

Gemäß einer weiteren vorteilhaften Ausführungsform der erfindungsgemäßen Sicherheitsgurtanordnung ist an dem Sicherheitsgurt eine verschiebbare Gurtzunge angeordnet, deren einsteckseitiges Ende in die Vertiefung in dem Gurtführungselement eingesteckt werden kann. Bezüglich der hiermit verbundenen Vorteile sei auf die Beschreibung des erfindungsgemäßen Gurtführungselementes verwiesen.

In einer besonders bevorzugten Ausführungsform der erfindungsgemäßen Sicherheitsgurtanordnung ist die längliche Führung in Fahrtrichtung des Kraftfahrzeuges geöffnet. Da der Sicherheitsgurt im Rahmen des Anschnallvorganges nach vorne - also in Fahrtrichtung - gezogen wird, gleitet der Sicherheitsgurt während des Anschnallvorganges automatisch aus der länglichen Führung des Gurtführungselementes heraus.

Die Erfindung wird im Folgenden an Hand von beispielhaften Ausführungsformen unter Bezugnahme auf die zugehörigen Zeichnungen näher erläutert. Es zeigen:
- Fig. 1: eine schematische Darstellung der erfindungsgemäßen Sicherheitsgurtanordnung mit dem erfindungsgemäßen Gurtführungselement,
- Fig. 2: eine Vorderansicht des Endbeschlages des Sicherheitsgurtes und der fahrzeugseitigen Gurtöse von Fig. 1,
- Fig. 3: eine Seitenansicht des Endbeschlages des Sicherheitsgurtes und der fahrzeugseitigen Gurtöse von Fig. 2,
- Fig. 4: eine Vorderansicht des Gurtführungselementes von Fig. 1,
- Fig. 5: eine Draufsicht auf das Gurtführungselement von Fig. 4,
- Fig. 6: eine Vorderansicht des Gurtführungselementes von Fig. 4 und 5 mit hieran befestigter Gurtzunge,
- Fig. 7: eine Vorderansicht des Gurtführungselementes von Fig. 4 und 5 mit hieran befestigtem Gurtendbeschlag und
- Fig. 8: eine Vorderansicht des Gurtführungselementes von Fig. 4 und 5 in einer zweiten Ausführungsform mit hieran befestigtem Gurtendbeschlag.

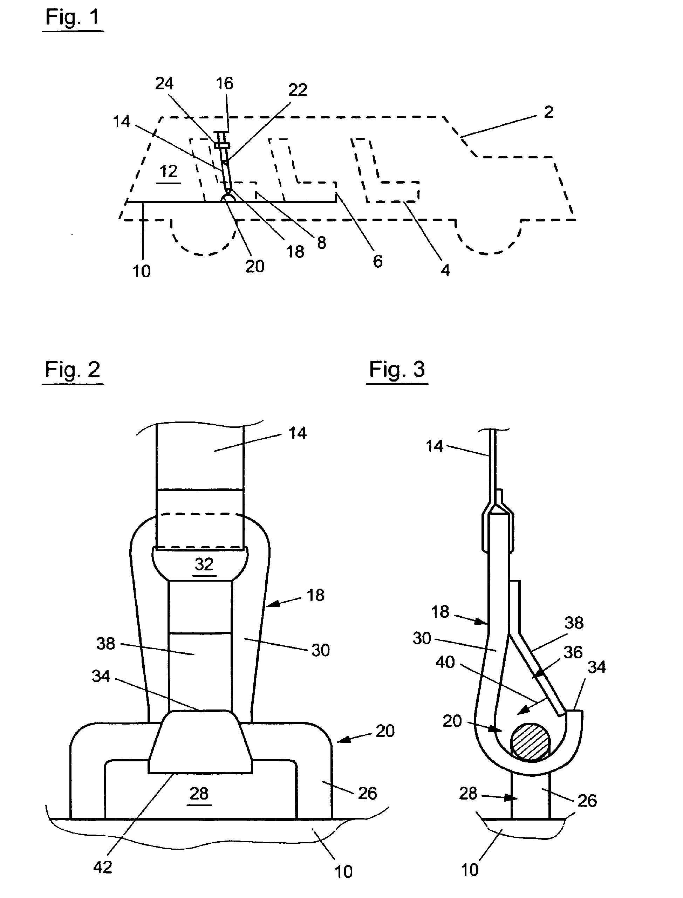

Fig. 1 zeigt eine schematische Darstellung eines Kraftfahrzeuges mit der erfindungsgemäßen Sicherheitsgurtanordnung und dem erfindungsgemäßen Gurtführungselement.

Das Kraftfahrzeug 2 weist eine vordere, erste Sitzreihe 4 für den Fahrer und den Beifahrer, eine dahinter angeordnete mittlere, zweite Sitzreihe 6 und eine hinter der mittleren Sitzreihe 6 angeordnete hintere, dritte Sitzreihe 8 für weitere Fahrzeuginsassen auf. Es ist anzumerken, dass es sich bei der letztgenannten Sitzreihe ebenso um eine vierte Sitzreihe handeln könnte. Die dritte Sitzreihe 8 ist auf einer Laderaumfläche 10 angeordnet, die sich bis in das Heck des Kraftfahrzeuges 2 erstreckt und die untere Begrenzung eines Laderaumes 12 innerhalb des Kraftfahrzeuges 2 bildet. Die dritte Sitzreihe 8 kann entfernt bzw. umgeklappt werden, um den Laderaum 12 zu vergrößern.

Die Sicherheitsgurtanordnung weist einen Sicherheitsgurt 14 für die Fahrzeuginsassen auf, die auf der dritten Sitzreihe 8 sitzen. Der Sicherheitsgurt 14 ist an seinem oberen Ende mit einer Gurtstraffungseinrichtung 16 verbunden, in die er eingezogen werden kann, und weist an seinem der Gurtstraffungseinrichtung 16 abgewandten Ende einen Endbeschlag 18 auf. In der Nähe von oder auch auf der Laderaumfläche 10 ist eine fahrzeugseitige Gurtöse 20 vorgesehen, an der der Endbeschlag 18 manuell lösbar angebracht ist. Des Weiteren weist der Sicherheitsgurt 14 eine Gurtzunge 22 auf, die entlang des Sicherheitsgurtes 14 verschiebbar ist und in ein entsprechendes Gegenstück (nicht dargestellt) eingerastet werden kann, um den Sicherheitsgurt 14 in einer den Fahrzeuginsassen umschließenden Position zu arretieren.

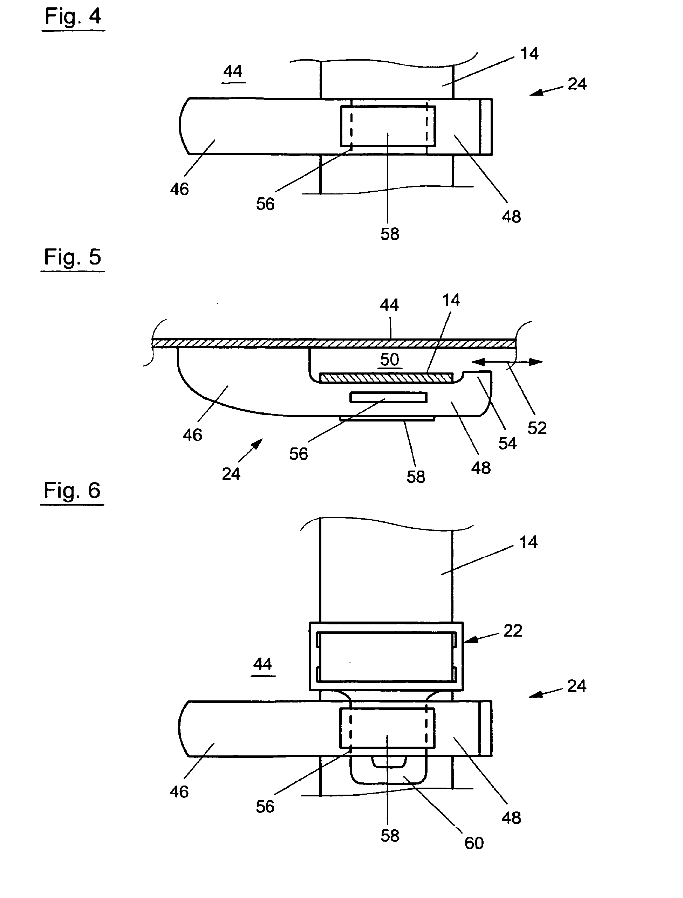

Der Sicherheitsgurt 14 ist ferner durch ein an der Innenwand des Kraftfahrzeuges 2 angeordnetes Gurtführungselement 24 geführt, dessen Aufbau später unter Bezugnahme auf die Fig. 4 und 5 eingehender erläutert werden soll.

Die Fig. 2 und 3 zeigen den an der Gurtöse 20 lösbar befestigten Endbeschlag 18 des Sicherheitsgurtes 14. Die Gurtöse 20 weist einen gekrümmten Bügel 26 auf, dessen Enden mit dem Laderaumboden 10 oder einem anderen ortsfesten Teil des Kraftfahrzeuges 2 verbunden sind. Der Bügel 26 umgibt zusammen mit dem Laderaumboden 10 eine Ösenöffnung 28 der Gurtöse 20.

Der Endbeschlag 18 ist in der Art eines Karabinerhakens ausgebildet, der in die Gurtöse 20 eingehakt ist. Der karabinerartige Endbeschlag 18 weist einen hakenförmigen Abschnitt 30 auf, der an seinem dem Sicherheitsgurt 14 zugewandten Ende eine Aussparung 32 zur Befestigung des Sicherheitsgurtes 14 und an seinem dem Sicherheitsgurt 14 abgewandten Ende eine Hakenspitze 34 aufweist. Zwischen der Hakenspitze 34 und dem hakenförmigen Abschnitt 30 ist eine Hakenöffnung 36 ausgebildet, durch die der Bügel 26 der Gurtöse 20 in den karabinerartigen Endbeschlag 18 eingeführt werden kann. Die Hakenöffnung 36 ist von einem Rückhalteteil 38 überspannt, das einerseits an dem hakenförmigen Abschnitt 30 festgelegt ist und andererseits gegen die Innenseite der Hakenspitze 34 vorgespannt ist. Das Rückhalteteil 38 ist biegbar ausgebildet, so dass es in Richtung des Pfeils 40 in eine die Hakenöffnung 36 freigebende Position gebogen werden kann, wenn der Bügel 26 eingeführt wird. Umgekehrt muss das Rückhalteteil 38 zunächst wieder manuell in Richtung des Pfeils 40 gebogen werden, bevor der Bügel 26 durch die Hakenöffnung 36 entfernt werden kann.

Wie aus Fig. 2 ersichtlich, ist der hakenförmige Abschnitt 30 plattenartig - nämlich als metallisches Blechteil - ausgebildet und weist eine Breite auf, die sich in Richtung der Hakenspitze 34 verjüngt, so dass die Breite am Hakengrund 42 größer als die Breite an der Hakenspitze 34 ist. Die Verjüngung des hakenförmigen Abschnittes 30 vereinfacht das Einhaken in die Ösenöffnung 28 der Gurtöse 20.

Die Fig. 4 und 5 zeigen eine vergrößerte Darstellung des erfindungsgemäßen Gurtführungselementes 24 von Fig. 1, wobei Fig. 4 eine Vorderansicht und Fig. 5 eine Draufsicht zeigt.

Das Gurtführungselement 24 ist an einem Verkleidungsteil 44 befestigt, das die Innenwand des Kraftfahrzeuges 2 ausbildet, und umfasst ein Befestigungsteil 46 und einen Bügel 48. Das Befestigungsteil 46 ist unmittelbar an dem Verkleidungsteil 44 befestigt. An dem dem Verkleidungsteil 44 abgewandten Ende des Befestigungsteiles 46 schließt sich der Bügel 48 an, der sich ausgehend von dem Befestigungsteil 46 in Fahrtrichtung nach vorne und im Wesentlichen parallel zu der Innenwand bzw. zu dem Verkleidungsteil 44 erstreckt. Auf diese Weise ist zwischen dem Bügel 48 einerseits und dem Verkleidungsteil 44 andererseits eine längliche Führung 50 ausgebildet, durch die der Sicherheitsgurt 14 geführt ist.

Die längliche Führung 50 ist an dem dem Befestigungsteil 46 abgewandten Ende des Bügels 48 offen, also in Fahrtrichtung des Kraftfahrzeuges 2 geöffnet, so dass der Sicherheitsgurt 14 seitlich eingeführt und herausgenommen werden kann, wie dies an Hand des Doppelpfeiles 52 in Fig. 5 angedeutet ist. Um jedoch ein ungewolltes Herausgleiten des Sicherheitsgurtes 14 aus der länglichen Führung 50 zu verhindern, ist an dem dem Befestigungsteil 46 abgewandten Ende des Bügels 48 ein vorspringender Ansatz 54 vorgesehen. Der vorspringende Ansatz 54 erstreckt sich in Richtung der Innenwand bzw. des Verkleidungsteiles 44, ohne die seitliche Öffnung der länglichen Führung 50 gänzlich zu verschließen.

An dem Gurtführungselement 24 ist ferner eine längliche Vertiefung 56 zum Einstecken des einsteckseitigen Endes der Gurtzunge 22 vorgesehen. Die Vertiefung 56 ist an der nach oben weisenden Seite des Bügels 48 des Gurtführungselementes 24 vorgesehen und ist in der dargestellten Ausführungsform als durchgehende Aussparung ausgebildet, die sich von oben nach unten durch den Bügel 48 erstreckt. Eine durchgehende Vertiefung ist insofern von Vorteil, als dass auch besonders lange einsteckseitige Enden der Gurtzunge 22 sicher aufgenommen werden können. Die längliche Vertiefung 56 erstreckt sich im Wesentlichen in der Erstreckungsrichtung des Bügels 48, wie dies insbesondere aus Fig. 5 hervorgeht.

Das Gurtführungselement 24 weist ferner ein Befestigungsmittel zur Befestigung des Endbeschlages 18 an dem Gurtführungselement 24 auf. In der dargestellten Ausführungsform wird das Befestigungsmittel von einem Magneten 58 gebildet, an dem der metallische Endbeschlag 18 anhaften kann. Der Magnet 58 ist an dem Bügel 48 angeordnet und dem Innenraum des Kraftfahrzeuges 2 zugewandt, d.h. der Magnet 58 ist auf der dem Verkleidungsteil 44 abgewandten Seite des Bügels 48 vorgesehen.

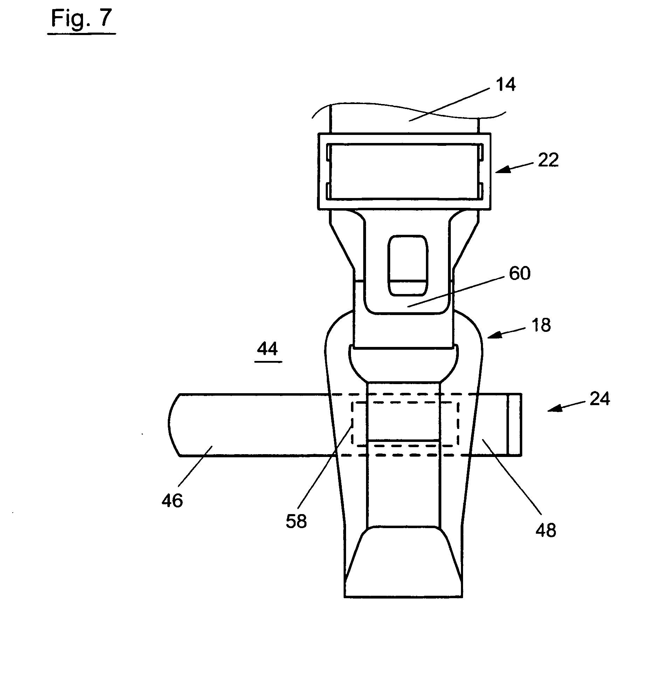

Nachfolgend wird die Funktionsweise des Gurtführungselementes 24 unter Bezugnahme auf die Fig. 6 und 7 beschrieben.

Wird der Sicherheitsgurt 14 nicht zum Anschnallen eines Fahrzeuginsassen benötigt, so kann dieser in die in Fig. 6 dargestellte Position gebracht werden. Hierbei wird zunächst die Gurtzunge 22 derart weit an dem Sicherheitsgurt 14 nach oben verschoben, dass diese oberhalb des Gurtführungselementes 24 angeordnet ist. Anschließend wird der Sicherheitsgurt 14 seitlich in die längliche Führung 50 eingebracht, um abschließend das einsteckseitige Ende 60 der Gurtzunge 22 von oben in die Vertiefung 56 einzuführen. In dieser Position kann die Gurtzunge 22 nicht gegen das Verkleidungsteil 44 schlagen, wodurch dessen Beschädigung vermieden wird. Der Sicherheitsgurt 14 selbst ist sicher und straff in der länglichen Führung 50 geführt.

Wird die dritte Sitzreihe 8 (Fig. 1) umgeklappt oder herausgenommen, um den Laderaum 12 zu vergrößern, so wird der Sicherheitsgurt 14 nicht mehr benötigt, so dass dieser nach dem Lösen des Endbeschlages 18 von der fahrzeugseitigen Gurtöse 20 in die Gurtstraffungseinrichtung 16 eingezogen werden kann. Um nun zu verhindern, dass der weiterhin vorstehende Endbeschlag 18 lose herabhängt und gegen das Verkleidungsteil 44 schlagen kann, wird dieser an den Magneten 58 des Bügels 48 herangeführt, an dem der metallische Endbeschlag 18 somit sicher befestigt ist (Fig. 7).

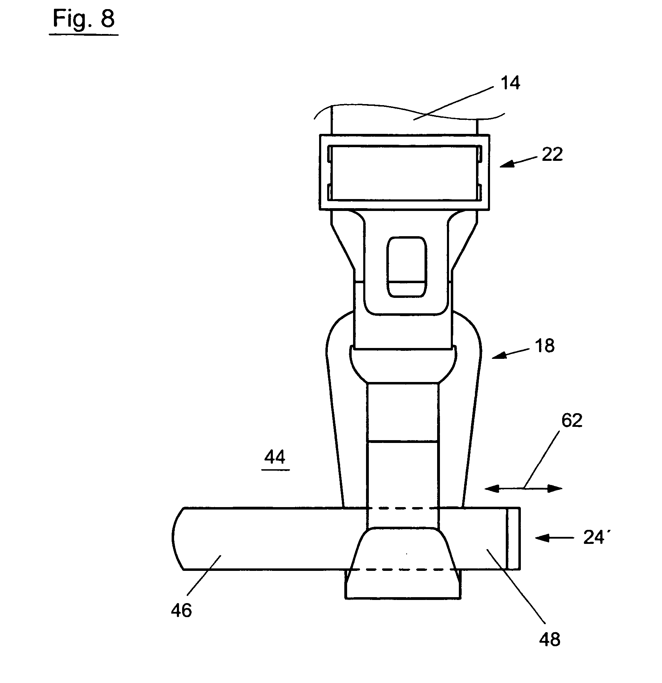

Fig. 8 zeigt eine Ausführungsform des erfindungsgemäßen Gurtführungselementes 24, das der ersten Ausführungsform im wesentlichen ähnelt, so dass gleiche Bezugszeichen für gleiche Teile verwendet werden und die obige Beschreibung entsprechend gilt. Nachfolgend soll lediglich auf die Unterschiede zu der ersten Ausführungsform eingegangen werden.

Bei der zweiten Ausführungsform kann auf einen Magneten 58 verzichtet werden. Als Befestigungsmittel dient bei der zweiten Ausführungsform der Bügel 48 selbst. Der Bügel 48 und der hakenförmige Endbeschlag 18 sind derart dimensioniert, dass der hakenförmige Endbeschlag 18 in den Bügel 48 eingehakt und/oder seitlich auf den Bügel 48 aufgeschoben werden. Letzteres in an Hand des Doppelpfeils 62 in Fig. 8 angedeutet.

Erfindungsgemäß sind die beiden Ausführungsformen jedoch in der Art zu kombinieren, dass die in Fig. 8 dargestellte Ausführungsform zusätzlich den Magneten 58 aufweist, so dass der Fahrzeuginsasse die Befestigungsart für den Endbeschlag 18 frei wählen kann.

### Bezugszeichenliste

- 2: Kraftfahrzeug
- 4: erste Sitzreihe
- 6: zweite Sitzreihe
- 8: dritte Sitzreihe
- 10: Laderaumboden
- 12: Laderaum
- 14: Sicherheitsgurt
- 16: Gurtstraffungseinrichtung
- 18: Endbeschlag
- 20: fahrzeugseitige Gurtöse
- 22: Gurtzunge
- 24: Gurtführungselement (erste Ausführungsform)
- 24': Gurtführungselement (zweite Ausführungsform)
- 26: Bügel
- 28: Ösenöffnung
- 30: hakenförmiger Abschnitt
- 32: Aussparung
- 34: Hakenspitze
- 36: Hakenöffnung
- 38: Rückhalteteil
- 40: Richtungspfeil
- 42: Hakengrund
- 44: Verkleidungsteil
- 46: Befestigungsteil
- 48: Bügel
- 50: längliche Führung
- 52, 62: Doppelpfeil
- 54: vorspringender Ansatz
- 56: Vertiefung
- 58: Magnet
- 60: einsteckseitiges Ende

## Patentansprüche

1. Gurtführungselement für einen Sicherheitsgurt (14) eines Kraftfahrzeuges (2) mit einem Bügel (48), der unter Ausbildung einer länglichen Führung (50) zwischen dem Bügel (48) und der Innenwand des Kraftfahrzeuges (2) an der Innenwand befestigbar ist, wobei ein Befestigungsmittel (48, 58) zur Befestigung des Endbeschlages (18) eines Sicherheitsgurtes (14) an dem Gurtführungselement (24, 24') vorgesehen ist, das als Magnet (58) ausgebildet ist, **dadurch gekennzeichnet, dass** der Magnet (58) an dem Bügel (48) angeordnet ist.

2. Gurtführungselement nach Anspruch 1, **dadurch gekennzeichnet, dass** der Magnet (58) im Einbauzustand des Gurtführungselementes (24) auf der dem Innenraum zugewandten Seite des Gurtführungselementes (24) angeordnet ist.

3. Gurtführungselement nach einem der vorangehenden Ansprüche, **dadurch gekennzeichnet, dass** das Gurtführungselement (24, 24') ein Befestigungsteil (46) aufweist, das an der Innenwand befestigbar und an dem der Bügel (48) angeordnet ist.

4. Gurtführungselement nach Anspruch 3, **dadurch gekennzeichnet, dass** die längliche Führung (50) an dem dem Befestigungsteil (46) abgewandten Ende des Bügels (48) offen ist, so dass ein Sicherheitsgurt (14) seitlich einbringbar ist.

5. Gurtführungselement nach Anspruch 4, **dadurch gekennzeichnet, dass** an dem dem Befestigungsteil (46) abgewandten Ende des Bügels (48) ein vorspringender Ansatz (54) vorgesehen ist, der sich im Einbauzustand des Gurtführungselementes (24, 24') in Richtung der Innenwand erstreckt.

6. Gurtführungselement nach einem der vorangehenden Ansprüche, **dadurch gekennzeichnet, dass** an dem Gurtführungselement (24, 24') eine Vertiefung (56) zum Einstecken des einsteckseitigen Endes (60) einer Gurtzunge (22) vorgesehen ist.

7. Gurtführungselement nach Anspruch 6, **dadurch gekennzeichnet, dass** die Vertiefung (56) im Einbauzustand des Gurtführungselementes (24, 24') auf der nach oben weisenden Seite des Gurtführungselementes (24) angeordnet ist.

8. Gurtführungselement nach Anspruch 7, **dadurch gekennzeichnet, dass** die Vertiefung (56) an dem Bügel (48) vorgesehen ist.

9. Sicherheitsgurtanordnung für ein Kraftfahrzeug mit einem Sicherheitsgurt (14), der mit einem lösbaren Endbeschlag (18) versehen ist, und einem Gurtführungselement (24, 24') nach einem der vorangehenden Ansprüche.

10. Sicherheitsgurtanordnung nach Anspruch 9, **dadurch gekennzeichnet, dass** der lösbare Endbeschlag (18) metallisch ausgebildet ist.

11. Sicherheitsgurtanordnung nach Anspruch 9 oder 10, **dadurch gekennzeichnet, dass** der lösbare Endbeschlag (18) hakenförmig ausgebildet ist.

12. Sicherheitsgurtanordnung nach Anspruch 11, **dadurch gekennzeichnet, dass** der lösbare Endbeschlag (18) in der Art eines Karabinerhakens ausgebildet ist.

13. Sicherheitsgurtanordnung nach Anspruch 11 oder 12, **dadurch gekennzeichnet, dass** der Bügel (48) und der hakenförmige Endbeschlag (18) derart dimensioniert sind, dass der hakenförmige Endbeschlag (18) in den Bügel (48) einhakbar ist.

14. Sicherheitsgurtanordnung nach einem der Ansprüche 11 bis 13, **dadurch gekennzeichnet, dass** der hakenförmige Endbeschlag (18) seitlich auf den Bügel (48) aufschiebbar ist.

15. Sicherheitsgurtanordnung nach einem der Ansprüche 9 bis 14, **dadurch gekennzeichnet, dass** an dem Sicherheitsgurt (14) eine verschiebbare Gurtzunge (22) angeordnet ist, deren einsteckseitiges Ende (60) in die Vertiefung (56) in dem Gurtführungselement (24, 24') einsteckbar ist.

16. Sicherheitsgurtanordnung nach einem der Ansprüche 9 bis 15, **dadurch gekennzeichnet, dass** die längliche Führung (50) in Fahrtrichtung des Kraftfahrzeuges geöffnet ist.

## Claims

1. A belt guide element for a safety belt (14) of a motor vehicle, comprising a bracket (48) which can be fastened to the inside wall by forming an oblong guide (50) between the bracket (48) and the inside wall of the motor vehicle (2), with a fastening means (48, 58) being provided for fastening the end fitting (18) of a safety belt (14) to the belt guide element (24, 24') which is arranged as a magnet (58), **characterized in that** the magnet (58) is arranged on the bracket (48).

2. A belt guide element according to claim 1, **characterized in that** the magnet (58) is arranged on the side of the belt guide element (24) facing the interior space in the mounted state of the belt guide element (24).

3. A belt guide element according to one of the preceding claims, **characterized in that** the belt guide element (24, 24') comprises a fastening part (46) which can be fastened to the inside wall and is arranged on the bracket (48).

4. A belt guide element according to claim 3, **characterized in that** the oblong guide (50) is open on the end of the bracket (48) averted from the fastening part (46), so a safety belt (14) can be introduced from the side.

5. A belt guide element according to claim 4, **characterized in that** a protruding nose (54) is provided at the end of the bracket (48) which is averted from the fastening part (46), which nose extends in the mounted state of the belt guide element (24, 24') in the direction of the inside wall.

6. A belt guide element according to one of the preceding claims, **characterized in that** a depression (56) for inserting the insert-side end (60) of a belt tongue (22) is provided on the belt guide element (24, 24').

7. A belt guide element according to claim 6, **characterized in that** the depression (56) is arranged on the upwardly facing side of the belt guide element (24) in the mounted state of the belt guide element (24, 24').

8. A belt guide element according to claim 7, **characterized in that** the depression (56) is provided on the bracket (48).

9. A safety belt arrangement for a motor vehicle, comprising a safety belt (14) which is provided with a detachable end fitting (18) and a belt guide element (24, 24') according to one of the preceding claims.

10. A safety belt arrangement according to claim 9,
**characterized in that** the detachable end fitting (18) is arranged to be metallic.

11. A safety belt arrangement according to claim 9 or 10,
**characterized in that** the detachable end fitting (18) is arranged in the form of a hook.

12. A safety belt arrangement according to claim 11,
**characterized in that** the detachable end fitting (18) is arranged in the manner of a carbine swivel.

13. A safety belt arrangement according to claim 11 or 12,
**characterized in that** the bracket (48) and the hook-like end fitting (18) are dimensioned in such a way that the hook-like end fitting (18) can be hooked into the bracket (48).

14. A safety belt arrangement according to one of the claims 11 to 13, **characterized in that** the hook-like end fitting (18) can be slid laterally onto the bracket (48).

15. A safety belt arrangement according to one of the claims 9 to 14, **characterized in that** a displaceable belt tongue (22) is arranged on the safety belt (14) whose insert-side end (60) can be inserted into the depression (56) in the belt guide element (24, 24').

16. A safety belt arrangement according to one of the claims 9 to 15, **characterized in that** the oblong guide (50) is opened in the direction of travel of the motor vehicle.

## Revendications

1. Élément de guidage de sangle pour une ceinture de sécurité (14) d'un véhicule à moteur (2) avec un étrier (48) qui peut être fixé, en formant un guide allongé (50) entre l'étrier (48) et la paroi intérieure du véhicule à moteur (2), sur la paroi intérieure, un élément de fixation (48, 58) conçu comme un aimant (58) étant prévu pour fixer la ferrure d'extrémité (18) d'une ceinture de sécurité (14) sur l'élément de guidage de sangle (24, 24'), **caractérisé en ce que** l'aimant (58) est disposé sur l'étrier (48).

2. Élément de guidage de sangle selon la revendication 1, **caractérisé en ce que** l'aimant (58) est disposé, quand l'élément de guidage de sangle (24) est monté, sur le côté de l'élément de guidage de sangle (24) tourné vers l'intérieur.

3. Élément de guidage de sangle selon l'une des revendications précédentes, **caractérisé en ce que** l'élément de guidage de sangle (24, 24') présente une partie de fixation (46) qui peut être fixée sur la paroi intérieure et sur laquelle l'étrier (48) est disposé.

4. Élément de guidage de sangle selon la revendication 3, **caractérisé en ce que** le guide allongé (50) est ouvert à l'extrémité de l'étrier (48) opposée à la partie de fixation (46), de sorte qu'une ceinture de sécurité (14) peut être insérée latéralement.

5. Élément de guidage de sangle selon la revendication 4, **caractérisé en ce qu'**il est prévu à l'extrémité de l'étrier (48) opposée à la partie de fixation (46) un rebord en saillie (54) qui s'étend en direction de la paroi intérieure quand l'élément de guidage de sangle (24, 24') est monté.

6. Élément de guidage de sangle selon l'une des revendications précédentes, **caractérisé en ce qu'**il est prévu sur l'élément de guidage de sangle (24, 24') un creux (56) pour l'insertion de l'extrémité du côté à insérer (60) d'une languette de ceinture (22).

7. Élément de guidage de sangle selon la revendication 6, **caractérisé en ce que** le creux (56) est disposé, quand l'élément de guidage de sangle (24, 24') est monté, sur le côté dirigé vers le haut de l'élément de guidage de sangle (24).

8. Élément de guidage de sangle selon la revendication 7, **caractérisé en ce que** le creux (56) est prévu sur l'étrier (48).

9. Dispositif de ceinture de sécurité pour un véhicule à moteur avec une ceinture de sécurité (14) qui est munie d'une ferrure d'extrémité amovible (18) et un élément de guidage de sangle (24, 24') selon l'une des revendications précédentes.

10. Dispositif de ceinture de sécurité selon la revendication 9, **caractérisé en ce que** la ferrure d'extrémité amovible (18) est métallique.

11. Dispositif de ceinture de sécurité selon la revendication 9 ou 10, **caractérisé en ce que** la ferrure d'extrémité amovible (18) est en forme de crochet.

12. Dispositif de ceinture de sécurité selon la revendication 11, **caractérisé en ce que** la ferrure d'extrémité amovible (18) est en forme de mousqueton.

13. Dispositif de ceinture de sécurité selon la revendication 11 ou 12, **caractérisé en ce que** l'étrier (48) et la ferrure d'extrémité en forme de crochet (18) sont dimensionnés de telle façon que la ferrure d'extrémité en forme de crochet (18) peut être accrochée dans l'étrier (48).

14. Dispositif de ceinture de sécurité selon l'une des revendications 11 à 13, **caractérisé en ce que** la ferrure d'extrémité en forme de crochet (18) peut être enfilée latéralement pardessus l'étrier (48).

15. Dispositif de ceinture de sécurité selon l'une des revendications 9 à 14, **caractérisé en ce qu'**il est prévu sur la ceinture de sécurité (14) une languette de ceinture (22) déplaçable dont l'extrémité du côté à insérer (60) peut être insérée dans le creux (56) dans l'élément de guidage de sangle (24, 24").

16. Dispositif de ceinture de sécurité selon l'une des revendications 9 à 15, **caractérisé en ce que** le guide allongé (50) est ouvert dans le sens de la marche du véhicule à moteur.
